# EUROPÄISCHE PATENTSCHRIFT

(11) **EP 1 072 998 B1**
(45) Veröffentlichungstag und Bekanntmachung des Hinweises auf die Patenterteilung: **04.08.2004**
(21) Anmeldenummer: 00111798.5
(22) Anmeldetag: 05.06.2000
(51) Int. Cl.: G06K 7/00

(54) **Kontaktiereinrichtung**
Contacting device
Dispositif de contact

(30) Priorität: 26.07.1999 DE 19934964; 24.12.1999 DE 19963148
(43) Veröffentlichungstag der Anmeldung: 31.01.2001
(73) Patentinhaber: AMPHENOL-TUCHEL ELECTRONICS GmbH, D-74080 Heilbronn (DE)
(72) Erfinder: Braun, Gerhard, 74626 Bretzfeld-Bitzfeld (DE); Heim, Michael, 74078 Heilbronn (DE); Reichardt, Manfred, 74189 Weinsberg (DE)
(74) Vertreter: Becker, Thomas, Dr., Dipl.-Ing.

(56) Entgegenhaltungen:
- EP-A- 0 782 089
- EP-A- 0 840 246
- EP-B- 0 472 692
- EP-B- 0 595 305
- DE-A- 19 743 937

## Beschreibung

Die Erfindung betrifft eine Kontaktiereinrichtung für eine Chipkarte, wobei der Begriff Chipkarte auch sogenannte IC-Karten beziehungsweise einen SIM (Subscriber Identity Module) umfaßt. In jedem Fall weist die Chipkarte einen Chip (ein Kontaktbild) mit korrespondierenden Kontaktflächen auf, die bei eingelegter Karte in der Kontaktiereinrichtung mit korrespondierenden Kontakten der Kontaktiereinrichtung kontaktiert werden.

Eine bekannte Kontaktiereinrichtung umfaßt ein Gehäuse mit einem Gehäusekörper, in dem Kontakte zur Kontaktierung korrespondierender Kontaktflächen auf der Chipkarte angeordnet sind und einen am Gehäusekörper (meist) schwenkbar angelenkten Deckel zur Aufnahme der Chipkarte, wobei der Deckel nach Verschwenkung gegen den Grundkörper und anschließender Parallelverschiebung zum Grundkörper mit diesem verriegelbar ist. Der Deckel kann ein- oder mehrteilig ausgebildet sein, so daß der Begriff Deckel nachstehend stets auch im Sinne eines Deckelteils zu verstehen ist.

Eine solche Kontaktiereinrichtung ist aus der Praxis bekannt.

Eine ähnliche Kontaktiereinrichtung beschreibt die EP 0 472 692 B1. Um den Verriegelungszustand anzuzeigen, sind bei der bekannten Kontaktiereinrichtung zwei separate Schaltkontakte sowie eine Kurzschlußbrücke im Deckel angeordnet. Anspruch 1 ist gegen dieses Dokument abgegrenzt.

Nachteilig bei dieser Einrichtung ist, daß der Verriegelungszustand zwischen Deckel und Gehäusekörper auch bei fehlender Chipkarte angezeigt wird.

Bei der Konfektionierung der Kontaktiereinrichtung werden die Kontakte, einschließlich der Schaltkontakte, auf eine zugehörigen Platine gelötet. Dies geschieht bei geschlossenem (verriegeltem) Deckel. Insoweit besteht ein weiterer Nachteil der bekannten Einrichtung darin, daß beim Lötprozeß der Kontaktiereinrichtung auf einer Platine die Schaltkontakte mechanisch und thermisch belastet sind und dadurch ein Verlust an Kontaktkraft auftritt.

Die EP 0 595 305 B1 beschreibt einen IC-Kartenleser mit einem aus zwei Schaltkontakten bestehenden Schalter. Wie beim Gegenstand der EP 0 472 692 B1 ist auch hier zu beanstanden, daß zwei Schaltkontakte notwendig sind.

Die DE 197 43 937 A1 offenbart eine Kontaktiereinrichtung für eine SIM-Karte mit einem Kartenanwesenheitsschalter, der jedoch bereits dann aktiviert wird, wenn der Deckel noch nicht in seiner Verriegelungsposition ist. Dadurch können Funktionsfehler auftreten.

Der Erfindung liegt die Aufgabe zugrunde, eine Kontaktiereinrichtung der gattungsgemäßen Art anzubieten, die einfach aufgebaut ist und ausschließlich in Funktionsstellung aktiviert wird.

Grundgedanke der Erfindung ist es, den Schaltkontakt so auszubilden und anzuordnen, daß er ausschließlich bei eingelegter Chipkarte und Verriegelung des Deckels aktiviert wird. Dazu kann der Schaltkontakt mit Hilfe der zum Beispiel in den Deckel eingelegten Chipkarte beim Aufsetzen des Deckels auf den Gehäusekörper in eine erste Kontaktposition mit korrespondierenden Kontaktstellen auf einer zugehörigen Platine geführt werden. Diese erste Kontaktposition soll erfindungsgemäß allerdings elektrisch wirkungslos bleiben. Der Erfindungsgedanke setzt insoweit weiter voraus, daß der Schaltkontakt beim Verriegeln des Deckels gegenüber dem Gehäusekörper in eine zweite Kontaktposition gebracht wird, in der der Schaltkontakt elektrisch aktiviert wird, wobei diese zweite Kontaktposition mit Hilfe des Schaltkontaktes zum Beispiel kurzgeschlossen werden kann.

Die Erfindung wird durch Anspruch 1 definiert. Der Schaltkontakt ist so ausgebildet und angeordnet, daß er ausschließlich bei eingelegter Chipkarte und Verriegelung des Deckels am Gehäusekörper elektrisch aktiviert wird.

Dabei kann der Schaltkontakt mit einer ersten und einer zweiten Kontaktstelle zusammenwirken, die senkrecht zur Verschieberichtung des Deckels in einer Ebene parallel zum Deckel in der Verriegelungsposition im Abstand zueinander angeordnet sind, wobei die Kontaktstellen in Verschieberichtung des Deckels an gleicher Stelle enden, eine der Kontaktstellen jedoch kürzer als die andere ausgebildet ist.

Bei dieser Ausführungsform liegt der Schaltkontakt in der vorstehend beschriebenen ersten Kontaktposition also nur gegen eine Kontaktstelle an. Erst bei der Verschiebung des Deckels in die Verriegelungsposition erreicht der Schaltkontakt beide Kontaktstellen gleichzeitig, so daß er erst jetzt elektrisch aktiviert (zum Beispiel kurzgeschlossen) wird.

Um den Verschleiß des Schaltkontaktes insbesondere während der Verschiebung des Deckels in die Verriegelungsposition so gering wie möglich zu halten, sieht eine alternative Ausführungsform vor, beide Kontaktstellen in gleicher Form (Größe) auszubilden, eine Kontaktstelle jedoch in einen elektrisch nicht aktivierbaren und einen elektrisch aktivierbaren Abschnitt zu unterteilen, wobei der elektrisch aktivierbare Abschnitt in Verschieberichtung des Deckels vor dem elektrisch nicht aktivierbaren Abschnitt verläuft.

Bei dieser Ausführungsform wird vermieden, daß der Schaltkontakt während der Verschiebebewegung des Deckels auf die, wenngleich nur sehr gering erhöhte Kontaktstelle auflaufen muß. Vielmehr wird bei dieser Ausführungsform erreicht, daß der Schaltkontakt entlang einer definierten Ebene gleitet, wobei diese Ebene die vorstehend beschriebenen zwei Kontaktpositionen umfaßt.

Diese zweite Ausführungsform ist insbesondere dann vorteilhaft, wenn ein geschlitzter Schaltkontakt eingesetzt wird. Dabei ist der Begriff geschlitzter" Schaltkontakt in dem Sinne zu verstehen, daß der Schaltkontakt weiterhin einteilig ist, jedoch in Axialrichtung eine Durchbrechung (einen Schlitz) aufweist, so daß zum Beispiel parallel zueinander verlaufende Abschnitte ausgebildet werden, die endseitig materialschlüssig verbunden sein können.

Die vorstehend näher beschriebenen zwei Kontaktpositionen lassen sich auch mit einem Schaltkontakt realisieren, der zwei in Axialrichtung beabstandete (hintereinander angeordnete) Kontaktzonen aufweist, wobei analog vorstehender Beschreibung die Aktivierung erst in der zweiten Kontaktposition erfolgt. Die Kontaktstellen auf der Platine sind dann ebenfalls hintereinander angeordnet.

Aufgrund der beschränkten räumlichen Verhältnisse in einer derartigen Kontaktiereinrichtung und einem Mindestabstand zwischen den nebeneinanderliegenden Kontaktstellen der Platine können sich konstruktive Probleme ergeben.

Dazu wird eine Kontaktiereinrichtung vorgeschlagen, bei der die Schenkel (Schaltkontaktschenkel) in Richtung auf korrespondierende Kontaktstellen derart asymmetrisch konvex ausgebildet sind, daß die mit den Kontaktstellen zusammenwirkenden Kontaktabschnitte der Schenkel einen größeren Abstand zueinander aufweisen als bei einer zur Mittenlängsachse der Schenkel symmetrisch konvexen Form.

Durch die Vergrößerung des Abstandes der Kontaktabschnitte der beiden Schenkel des Schaltkontaktes kann entsprechend der Abstand der zugehörigen Kontaktstellen auf der Platine vergrößert und damit die Sicherheit der Kontaktiereinrichtung erhöht werden.

Gleichzeitig wird durch eine konvexe Ausbildung der Schenkel eine sichere Kontaktierung auf den zugehörigen Kontaktstellen gewährleistet.

Der Schaltkontakt ist im Deckel angeordnet und kann dort zum Beispiel abschnittweise vom Isoliermaterial des Deckels umspritzt oder dort verpresst oder verrastet sein. Sein freies Ende (Kontaktende) soll nach einer Ausführungsform bei geöffnetem Deckel (ohne Karte) in den Raum vorstehen, den die Chipkarte in ihrer Funktionsstellung einnimmt. Diese Position soll der Schaltkontakt auch dann beibehalten, wenn der Deckel (ohne Karte) geschlossen wird. Umgekehrt wird bei eingelegter Karte erreicht, daß die Karte den Schaltkontakt wegdrückt, und zwar in die erste, elektrisch funktionslose Kontaktposition (sobald der Deckel auf den Gehäusekörper aufgesetzt, aber noch nicht mit diesem verriegelt ist).

Eine weitere Ausführungsform sieht vor, daß der Schaltkontakt so angeordnet und ausgebildet ist, daß er auch bei geschlossenem und verriegeltem Deckel, jedoch ohne einliegende Chipkarte, mechanisch nicht beaufschlagt wird.

Dazu kann eine Deckelfläche eine Öffnung aufweisen, in die ein freies Kontaktende hineinragt, sofern keine Chipkarte in der Einrichtung einliegt. Daraus ergibt sich der Vorteil, daß die Kontaktiereinrichtung ohne mechanische Vorspannung des Schaltkontaktes auf eine zugehörige Platine gelötet werden kann.

Eine Steuerkante des Schaltkontaktes, das ist die Kante, die von der Chipkarte beaufschlagt wird, kann elektrisch isoliert ausgebildet sein. Daraus folgt, daß ein Kurzschluß zwischen Karte und Schaltkontakt zuverlässig vermieden wird, da die Kurzschlußbrücke (zweite Kontaktposition des Schaltkontaktes) beim Schalten das Potential der Kontaktstellen auf der Platine einnimmt.

Gegenüber der eingangs genannten EP 0 472 692 B1 ergeben sich folgende Vorteile:

Anstelle von zwei Schaltkontakten wird nur ein einziger Schaltkontakt benötigt. Der Schaltkontakt läßt sich nur bei eingelegter Karte und im verriegelten Zustand der Kontaktiereinrichtung aktivieren. Dabei kann die Chipkarte in einer entsprechenden Aufnahme im Gehäusedeckel, aber auch im Gehäusekörper angeordnet werden. Beim Löten der Kontaktiereinrichtung auf eine zugehörige Platine (mit verriegeltem Deckel, aber ohne Karte) wird der Schaltkontakt mechanisch nicht beansprucht.

Weitere Merkmale der Erfindung ergeben sich aus den Merkmalen der Unteransprüche.

Die Erfindung wird nachstehend anhand verschiedener Ausführungsbeispiele näher beschrieben.

Dabei zeigen - in schematisierter Darstellung -
- Figur 1:: eine Kontaktiereinrichtung mit geöffnetem Deckel in einer Seitenansicht,
- Figur 2:: die Kontaktiereinrichtung nach Figur 1 in verriegeltem Zustand, jedoch ohne Chipkarte, im Schnitt
- Figur 3:: die Kontaktiereinrichtung nach Figur 1 in verriegeltem Zustand mit eingelegter Chipkarte, im Schnitt
- Figur 4:: eine Aufsicht auf eine zugehörige Platine,
- Figur 5:: zwei Schenkel eines Schaltkontaktes mit jeweils symmetrisch konvexer Form,
- Figur 6:: zwei Schenkel eines Schaltkontaktes mit asymmetrisch konvexer Form.

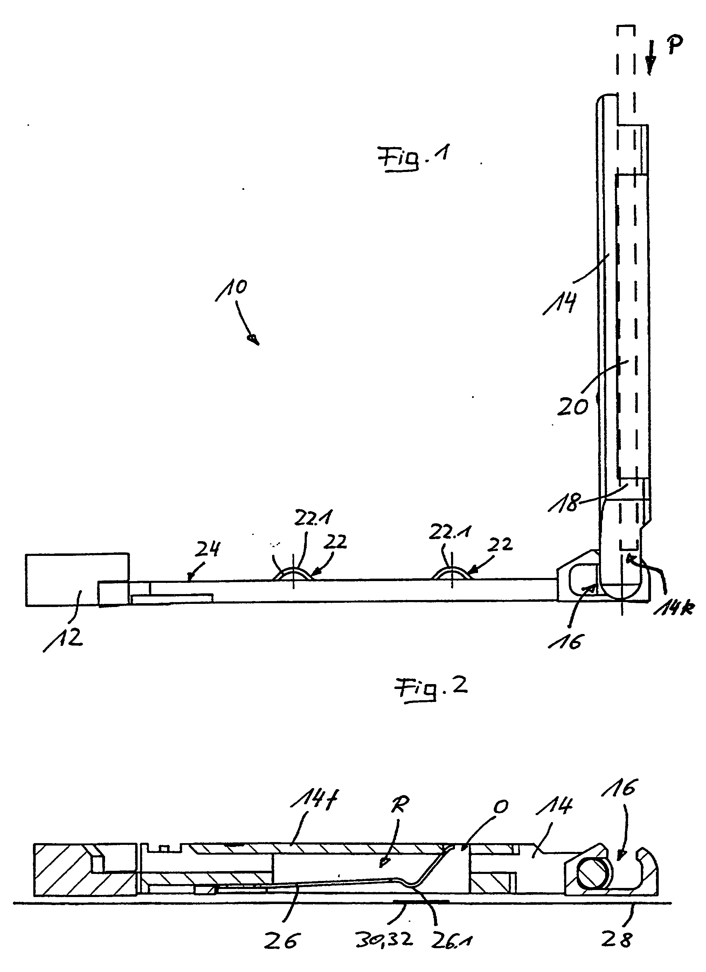

In Figur 1 bezeichnet das Bezugszeichen 10 eine erfindungsgemäße Kontaktiereinrichtung, die aus einem Gehäusekörper 12 und einem schwenkbar (Gelenk 16) daran angelenkten Deckel 14 besteht.

Der Deckel 14 weist randseitig in Richtung auf das Gelenk 16 verlaufende Führungsbahnen 18 auf, entlang der eine zugehörige Chipkarte 20 bei geöffnetem Deckel 14 zugeführt werden kann.

Im Gehäusekörper 12 sind Kontakte 22 angeordnet, die mit ihrem federnden Kontaktende 22.1 über eine Auflagefläche 24 vorstehen.

Im Deckel 14 ist ein Schaltkontakt 26 angeordnet, der, wie Figur 2 zeigt, auch bei geschlossenem Deckel 14, jedoch ohne einliegende Chipkarte 20, unbelastet in den Raum R sowie eine Öffnung O einer oberen Deckelfläche 14f hineinragt. Der Schaltkontakt 26 weist einen gekrümmten Kontaktabschnitt 26.1 auf, dessen Funktion nachstehend noch näher erläutert wird.

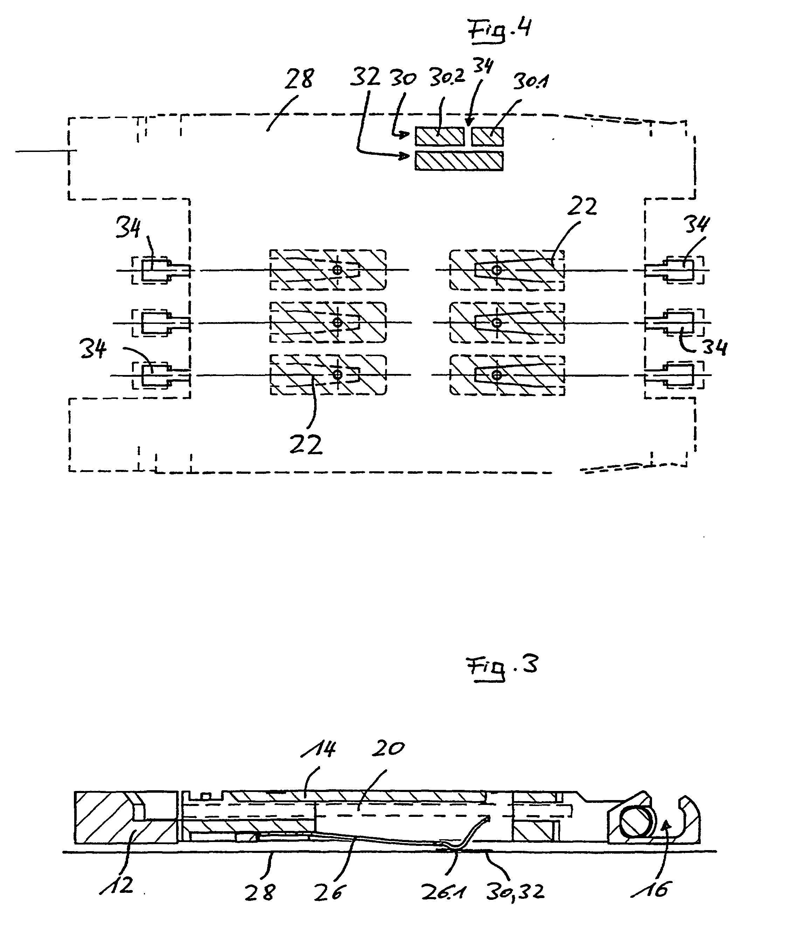

In Figur 2 ist mit dem Bezugszeichen 28 eine Platine gekennzeichnet, auf der die Kontakte 22 gelötet sind (Figur 4: Lötstellen 34).

In der Position gemäß Figur 2 befindet sich der Schaltkontakt 26 im Abstand zur Platine 28.

Auf der Platine 28 (Figur 4) sind neben den Lötstellen 34 für die Kontakte 22 zwei Kontaktstellen 30, 32 angeordnet. Jede Kontaktstelle besitzt eine Rechteckform. Die Kontaktstellen 30, 32 verlaufen nebeneinander. Die Kontaktstelle 30 ist in Längsrichtung jedoch bei 34 unterbrochen. Die beiden Teilabschnitte der Kontaktstelle 30 sind mit 30.1 und 30.2 gekennzeichnet.

Der Kontaktabschnitt 30.1 ist elektrisch inaktiv (isoliert), während der Abschnitt 30.2 sowie die Kontaktstelle 32 elektrisch aktivierbar sind.

Die Funktion der Einrichtung ist wie folgt:

Wie in Figur 1 schematisch dargestellt (Pfeil P) wird eine Chipkarte 20 in den Deckel 14 eingeführt, bis sie gegen eine hintere Anschlagkante 14k stößt. Dabei drückt die Chipkarte 20 den Schaltkontakt 26 weg (in der Figur nach links). Danach wird der Deckel 14 um das Gelenk 16 gegen den Gehäusekörper 12 verschwenkt, bis Kontaktflächen auf der Chipkarte 20 gegen die Kontaktenden 22.1 der Kontakte 22 zur Anlage kommen. Gleichzeitig gelangt der Kontaktbereich 26.1 des Schaltkontakts 26 auf den Kontaktabschnitt 30.1 und die Kontaktstelle 32 der Platine 28.

Da der Kontaktabschnitt 30.1 elektrisch inaktiv ist, bleibt diese erste Kontaktposition des Schaltkontakts 26 funktionslos.

Der Deckel 14 wird jetzt entlang des Gelenks 16 parallel zum Gehäusekörper 12 verschoben (in den Figuren 2, 3 nach links), bis er seine in den Figuren 2, 3 dargestellte endgültige Verriegelungsposition erreicht hat.

Parallel dazu wird der Schaltkontakt 26 verschoben, bis er auf dem Kontaktabschnitt 30.2 und der Kontaktstelle 32 der Platine 28 aufliegt, die gemeinsam mit dem Schaltkontakt 26 eine Kurzschlußbrücke bilden, die nun die Funktionsposition der Chipkarte 20 in der Kontaktiereinrichtung 10 anzeigt.

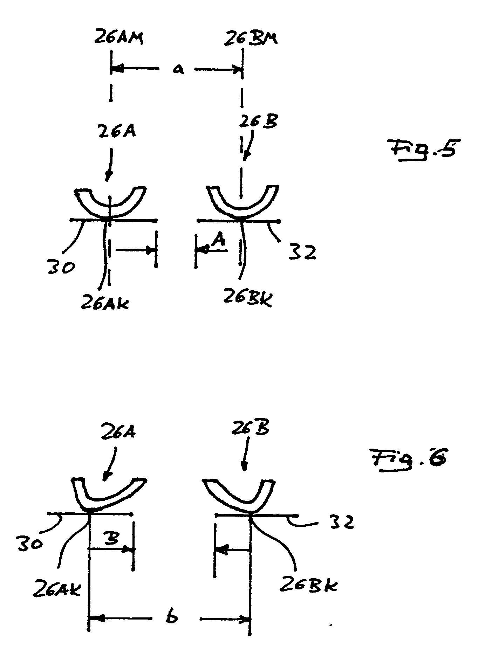

Aus den Figuren 5 und 6 ist zu erkennen, daß durch eine "nach außen asymmetrisch versetzte" Form von Schaltkontakt-Schenkel 26A, 26B zugehörige Kontaktabschnitte 26AK, 26BK bei der Ausführungsform nach Figur 6 einen größeren Abstand b gegenüber der Ausführungsform nach Figur 1 (Abstand a) aufweisen.

Zur Verdeutlichung sind Mittenlängsachsen 26AM, 26BM der Schenkel 26A, 26B in beiden Figuren eingezeichnet.

Entsprechend ist der Kontaktabschnitt 26AK des Schenkels 26A bei Figur 6 gegenüber Figur 5 nach links versetzt und der Kontaktabschnitt 26BK des Schenkels 26B bei Figur 6 gegenüber Figur 5 nach rechts versetzt angeordnet.

Daraus folgt, daß der Abstand zugehöriger Kontaktstellen 30, 32 ebenfalls bei der Ausführungsform nach Figur 6 gegenüber der Ausführungsform nach Figur 5 vergrößert werden kann (Abstand B > Abstand A).

## Patentansprüche

1. Kontaktiereinrichtung für eine Chipkarte (20) mit folgenden Merkmalen:
1.1 einem Gehäuse mit
1.1.1 einem Gehäusekörper (12), in dem Kontakte (22) zur Kontaktierung korrespondierender Kontaktflächen der Chipkarte (20) angeordnet sind, und
1.1.2 einem am Gehäusekörper (12) schwenkbar angelenkten Deckel (14), wobei
1.2 der Deckel (14) nach Verschwenkung gegen den Gehäusekörper (12) und anschließender Parallelverschiebung zum Gehäusekörper (12) mit diesem verriegelbar ist,
1.3 wobei die Kontaktiereinrichtung weiter umfaßt:
einen im Deckel (14) angeordneten Schaltkontakt (26),
**dadurch gekennzeichnet, daß**
der Schaltkontakt (26) ausschließlich bei einliegender Chipkarte (20) und Verriegelung des Deckels (14) am Gehäusekörper (12) elektrisch aktiviert wird, wobei
der Schaltkontakt (26)
so ausgebildet und angeordnet ist, daß ein freies Ehde des Schaltkontakts (26) bei geschlossenem Deckel (14), aber ohne Chipkarte (20) in einen Raum (R) vorsteht, den die Chipkarte (20) in ihrer Funktionsstellung einnimmt, oder in eine Öffnung (O) in einer den Deckel (14) begrenzenden Deckelfläche (14f) hineinragt.

2. Kontaktiereinrichtung nach Anspruch 1, bei der der Schaltkontakt (26) mit einer ersten (30) und einer zweiten (32) Kontaktstelle zusammenwirkt, die senkrecht zur Verschieberichtung des Deckels (14) in einer Ebene parallel zum Deckel (14) in der Verriegelungsposition im Abstand zueinander angeordnet sind, wobei die Kontaktstellen (30, 32) in Verschieberichtung des Deckels (14) an gleicher Stelle enden, eine der Kontaktstellen jedoch kürzer als die andere ausgebildet ist.

3. Kontaktiereinrichtung nach Anspruch 1, bei der der Schaltkontakt (26) mit einer ersten (30) und einer zweiten (32) Kontaktstelle zusammenwirkt, die senkrecht zur Verschieberichtung des Deckels (14) in einer Ebene parallel zum Deckel (14) in der Verriegelungsposition im Abstand zueinander angeordnet sind, wobei beide Kontaktstellen (30, 32) eine gleiche Form aufweisen, eine Kontaktstelle (30) jedoch in einen elektrisch nicht aktivierbaren (30.1) und einen elektrisch aktivierbaren (30.2) Abschnitt unterteilt ist und der elektrisch aktivierbare Abschnitt (30.2) in Verschieberichtung des Deckels (14) vor dem elektrisch nicht aktivierbaren Abschnitt (30.1) verläuft.

4. Kontaktiereinrichtung nach Anspruch 1, bei der der Schaltkontakt (26) einteilig ist.

5. Kontaktiereinrichtung nach Anspruch 1, bei der der Schaltkontakt (26) in Axialrichtung unter Ausbildung von zwei Schaltkontakt-Schenkeln (26A, 26B) zumindest teilweise geschlitzt ist.

6. Kontaktiereinrichtung nach Anspruch 1, bei der der Schaltkontakt (26) so angeordnet und ausgebildet ist, daß er bei geschlossenem und verriegeltem Deckel (14), jedoch ohne einliegende Chipkarte (20), mechanisch nicht beaufschlagt wird.

7. Kontaktiereinrichtung nach Anspruch 1, bei der der Schaltkontakt (26) im Deckel (14) verrastet ist.

8. Kontaktiereinrichtung nach Anspruch 1, bei der der Schaltkontakt (26) im Deckel (14) eingepresst ist.

9. Kontaktiereinrichtung nach Anspruch 5, wobei die Schenkel (26A, 26B) in Richtung auf korrespondierende Kontaktstellen (30, 32; 30.1, 30.2, 32) derart asymmetrisch konvex ausgebildet sind, daß die mit den Kontaktstellen (30, 32; 30.1, 30.2, 32) zusammenwirkenden Kontaktabschnitte (26AK, 26BK) der Schenkel (26A, 26B) einen größeren Abstand zueinander aufweisen als bei einer zur Mittenlängsachse (26AM, 26BM) der Schenkel (26A, 26B) symmetrisch konvexen Form.

## Claims

1. A contacting device for a chip card (20) with the following features:
1.1 a housing with
1.1.1 a housing body (12), in which contacts (22) for contacting corresponding contact surface on the chip card (20) are arranged,
1.1.2 a cover (14) pivotably connected on the housing body (12), wherein
1.2 the cover (14), after being pivoted against the housing body (12) and after subsequent parallel displacement relative to the housing body (12), can be locked thereat,
1.3 a switching contact (26) arranged in the cover (14) and embodied and arranged such that one free end of the switching contact (26), when the cover (14) is closed but without chip card (20), projects into a space R which is occupied by the chip card (20) in its operational position, or projects into an opening O provided in a cover surface (14f) delimiting the cover (14) and the switching contact (26) is electrically activated exclusively when a chip card (20) is inserted and the cover (14) is locked on the housing body (12).

2. The contacting device according to claim 1, wherein the switching contact (26) cooperates with a first (30) and a second (32) contact location which are arranged perpendicularly to the displacement direction of the cover (14) in a plane parallel to the cover (14) at a spacing to one another in the locking position, wherein the contact locations (30, 32) in the displacement direction of the cover (14) end at the same location, wherein, however, one of the contact locations is shorter than the other.

3. The contacting device according to claim 1, wherein the switched contact (26) cooperates with a first (30) and a second (32) contact location which are arranged perpendicularly to the displacement direction of the cover (14) in a plane parallel to the cover (14) at a spacing relative to one another in the locking position, wherein both contact locations (30, 32) have an identical shape, but one contact location (30) is divided into an electrically not activatable (30.1) and an electrically activatable (30.2) portion and the electrically activatable portion (30.2) extends in front of the electrically not activatable portion (30.1) in the displacement direction of the cover (14).

4. The contacting device according to claim 1, wherein the switching contact (26) is of a single-part construction.

5. The contacting device according to claim 1, wherein the switching contact (26) is slotted at least partially in the axial direction under formation of two switching contact legs (26A, 26B).

6. The contacting device according to claim 1, wherein the switching contact (26) is arranged and embodied such that it is mechanically not loaded when the cover (14) is closed and locked but without an inserted chip card (20).

7. The contacting device according to claim 1, wherein the switching contact (26) is pressed into the cover (14).

8. The contacting device according to claim 1, wherein the switching contact (26) is pressed into the cover (14)

9. The contacting device according to claim 5, wherein the legs (26A, 26B) are formed asymmetrically convex in the direction of the corresponding contact locations (30, 32; 30.1, 30.2, 32) such that the contact portions (26AK, 26BK) of the legs (26A, 26B) cooperating with the contact locations (30, 32; 30.1, 30.2, 32) have a greater spacing relative to one another than in a shape that is symmetrically convex relative to the central longitudinal axis (26AM, 26BM) of the legs (26A, 26B).

## Revendications

1. Dispositif de contact pour une carte à puce (20) présentant les caractéristiques suivantes :
1.1 un boîtier comprenant
1.1.1 un corps de boîtier (12) dans lequel sont placés des contacts (22) destinés à établir le contact entre des surfaces de contact en correspondance de la carte à puce (20), et
1.1.2 un couvercle (14) pivotant sur le corps du boîtier (12),
1.2 le couvercle (14) venant se bloquer contre celui-ci après pivotement contre le corps du boîtier (12) et déplacement consécutif parallèlement au corps du boîtier (12),
1.3 le dispositif de contact comprenant par ailleurs un contact de commutation (26) placé dans le couvercle (14), **caractérisé en ce que** le contact de commutation (26) est activé par un courant électrique, la carte à puce (20) étant insérée et le couvercle (14) étant bloqué contre le corps du boîtier (12), le contact de commutation (26) étant conformé et placé de manière à ce que, le couvercle étant fermé mais sans carte à puce (20), une extrémité libre du contact de commutation (26) dépasse dans un espace (R) que la carte à puce (20) inclut dans sa position de fonctionnement ou vienne se loger dans une ouverture (O) d'un recouvrement (14f) limitant le couvercle (14).

2. Dispositif de contact selon la revendication 1, dans lequel le contact de commutation (26) agit avec un premier (30) emplacement de contact et un second (32), placés à une certaine distance l'un de l'autre perpendiculairement au sens de déplacement du couvercle (14) dans un plan parallèle au couvercle (14) dans la position de blocage, les emplacements de contact (30, 32) aboutissant au même endroit dans le sens de déplacement du couvercle (14), l'un des emplacements de contact étant cependant plus court que l'autre.

3. Dispositif de contact selon la revendication 1, dans lequel le contact de commutation (26) agit avec un premier (30) emplacement de contact et un second (32) placés à une certaine distance l'un de l'autre perpendiculairement au sens de déplacement du couvercle (14) dans un plan parallèle au couvercle (14) dans la position de blocage, les deux emplacements de contact (30, 32) présentant la même forme, l'un des emplacements de contact (30) étant toutefois divisé en une partie ne pouvant pas être activée (30.1) par le courant électrique et une partie pouvant l'être (30.2), la partie pouvant être activée (30.2) par le courant électrique passant dans le sens de déplacement du couvercle (14) devant la partie ne pouvant pas être activée (30.1) par le courant électrique.

4. Dispositif de contact selon la revendication 1, dans lequel le contact de commutation (26) est d'une seule pièce.

5. Dispositif de contact selon la revendication 1, dans lequel le contact de commutation (26) est fendu au moins en partie dans le sens longitudinal avec une configuration en deux branches (26A, 26B) du contact de commutation.

6. Dispositif de contact selon la revendication 1, dans lequel le contact de commutation (26) est placé et conformé de manière qu'il n'est pas alimenté mécaniquement lorsque le couvercle (14) est fermé et bloqué sans que la carte à puce (20) soit insérée.

7. Dispositif de contact selon la revendication 1, dans lequel le contact de commutation (26) est emboîté dans le couvercle (14).

8. Dispositif de contact selon la revendication 1, dans lequel le contact de commutation (26) est incrusté dans le couvercle (14).

9. Dispositif de contact selon la revendication 5, les branches (26A, 26B) étant conformées de manière asymétrique convexe en direction des emplacements de contact en correspondance (30, 32 ; 30.1, 30.2, 32) de façon à ce que les éléments de contact (26AK, 26BK) des branches (26A, 26B) agissant avec les emplacements de contact (30, 32 ; 30.1, 30.2, 32) présentent entre eux une distance plus importante que pour une forme convexe symétrique par rapport à l'axe longitudinal médian (26AM, 26BM) des branches (26A, 26B).
